# EUROPÄISCHE PATENTANMELDUNG

(11) **EP 3 711 479 A1**
(43) Veröffentlichungstag der Anmeldung: **23.09.2020**
(21) Anmeldenummer: 20163720.4
(22) Anmeldetag: 17.03.2020
(51) Int. Cl.: A01K 7/02, A01K 39/02

(54) **TIERTRÄNKE**

(30) Priorität: 19.03.2019 DE 102019001866
(71) Anmelder: LUBING Maschinenfabrik Ludwig Bening GmbH & Co. KG, 49406 Barnstorf (DE)
(72) Erfinder: von der Assen, Markus, 49439 Steinfeld (DE); Hawk, Chris, Hixson, TN 37343 (US); Hawk, John, Harrison, TN 37341 (US); Hicks, Dustin, Georgetown, TN 37336 (US)
(74) Vertreter: Möller, Friedrich

(57) **Zusammenfassung**

Tiertränken verfügen über ein Flüssigkeitsleitungssystem (14), das Tränkestränge (16) mit diesen zugeordneten Tränkeventilen (21) aufweist. Wenn bei solchen Tiertränken an den Tränkeventilen (21) von den Tieren keine Flüssigkeit abgenommen wird, ruht die Flüssigkeit im Flüssigkeitsleitungssystem (14). Das kann zu hygienischen Problemen führen. Außerdem ist es bei bekannten Tiertränken aufwändig, den Flüssigkeitsdruck an den Tränkeventilen (21) so zu verändern, dass er den Anforderungen gerecht wird.

Die Erfindung sieht es vor, das Flüssigkeitsleitungssystem (14) zusätzlich zu den Tränkesträngen (16) mit einem Versorgungsstrang (17) zur gleichzeitigen parallelen Speisung aller Tränkestränge (16) mit Flüssigkeit und einem Rücklaufstrang (24) zur Rückführung von Flüssigkeit zu einem Flüssigkeitsvorrat (26) vorzusehen. Dadurch lässt sich zum einen eine Zirkulation der Flüssigkeit in mindestens Teilen des Flüssigkeitsleitungssystem (14) realisieren und zum anderen ermöglicht die strömungstechnische Parallelschaltung der Tränkestränge (16) eine einfache Anpassung des Flüssigkeitsdrucks an den Tränkeventilen (21).

## Beschreibung

Die Erfindung betrifft eine Tiertränke gemäß dem Oberbegriff des Anspruchs 1.

Tiertränken der hier angesprochenen Art dienen dazu, den Wasserbedarf von Tieren, insbesondere Nutztieren, wie Geflügel, zu decken. Üblicherweise sind solche Tiertränken so ausgebildet, dass die Tiere ihren Wasserbedarf selbsttätig decken können.

Vor allem bei der Massentierhaltung von insbesondere Geflügel sind die Tiertränken als sogenannte Strangtränken ausgebildet. Bei solchen Tiertränken sind mehrere Tränkeventile einem länglichen Tränkestrang zugeordnet. Der längliche rohrartige Tränkestrang dient zur Versorgung der Tiere mit Flüssigkeit, bei der es sich um Wasser, aber auch mit Zusatzstoffen, beispielsweise Medikamenten und/oder Aufbaustoffen, angereichertem Wasser handeln kann. Die Tränkeventile sind so ausgebildet, dass sie Wasser abgeben, wenn ein Tier das Tränkeventil selbsttätig öffnet, insbesondere durch Anheben und/oder Verkippen eines Ventilstifts des jeweiligen Tränkeventils.

An Tiertränken der vorstehend erläuterten Art werden verschiedene Anforderungen gestellt, und zwar insbesondere eine Gleichmäßigkeit und/oder Veränderbarkeit des an den Tränkeventilen anstehenden Wassers und die Hygiene. Die bisher bekannten Tiertränken, die als Strangtränken ausgebildet sind, erfüllen die Anforderungen nur unvollkommen.

Der Erfindung liegt die Aufgabe zugrunde, eine Tiertränke zu schaffen, die an allen ihren Tränkeventilen gleichermaßen einen gewünschten, insbesondere veränderbaren, Flüssigkeitsdruck gewährleistet und den hygienischen Anforderungen gerecht wird.

Eine Tiertränke zur Lösung der Aufgabe weist die Merkmale des Anspruchs 1 auf. Demnach sind mehrere mit Abstand nebeneinander verlaufende Tränkestränge mit jeweils mindestens einem Tränkeventil vorgesehen, die von einem gemeinsamen Versorgungsstrang gleichzeitig mit Flüssigkeit zur Wasserversorgung der Tiere speisbar sind. Zusätzlich ist mindestens ein Rücklaufstrang zur Rückführung von Flüssigkeit zum Flüssigkeitsvorrat vorgesehen. Dadurch, dass die benachbarten Tränkestränge vom gleichen Versorgungsstrang gleichzeitig mit Flüssigkeit speisbar sind, wird in strömungstechnischem Sinne eine Parallelschaltung realisiert. Durch diese Parallelschaltung kann eine größere Anzahl von Tränkesträngen mit insbesondere jeweils mehreren Tränkeventilen gleichzeitig und/oder gleichermaßen mit Flüssigkeit versorgt werden. Das gewährleistet eine ausreichende und gleichmäßige Flüssigkeitsversorgung sämtlicher Tränkeventile der mehreren Tränkestränge, insbesondere aller Tränkestränge. Durch die mindesten eine Rücklaufleitung werden ein Kreislaufstrang und/oder eine Ringleitung zur Erzeugung einer Flüssigkeitszirkulation mindestens im Versorgungsstrang, vorzugsweise aber auch in den Tränkesträngen, insbesondere allen Tränkesträngen, gewährleistet. Dadurch bleibt die Flüssigkeit in mindestens dem Versorgungsstrang und dem wenigstens einen Rücklaufstrang ständig in Bewegung, auch wenn momentan, beispielsweise nachts, die Tiere oder nur wenige Tiere Flüssigkeit an den Tränkeventilen abnehmen.

Die Tiertränke des Anspruchs 1 weist einen Flüssigkeitskreislauf auf.

Bevorzugt ist es vorgesehen, den mindestens einen Versorgungstrang und den wenigstens einen Rücklaufstrang miteinander flüssigkeitsführend zu verbinden. Dadurch bilden der jeweilige Versorgungsstrang und der hiermit verbundene Rücklaufstrang gemeinsam einen Zirkulationsstrang für einen Flüssigkeitskreislauf der Tränkeflüssigkeit. Insbesondere ist es vorgesehen, ein stromabwärtsseitiges Ende des jeweiligen Versorgungsstrangs mit einem in Strömungsrichtung gesehen anfänglichen Ende des Rücklaufstrangs flüssigkeitsführend zu verbinden.

Eine bevorzugte Ausführungsmöglichkeit der Tiertränke sieht es vor, Enden auf einer Seite der Tränkestränge mit einem gemeinsamen Versorgungsstrang zu verbinden und in Strömungsrichtung der Flüssigkeit durch den Versorgungsstrang gesehen den Rücklaufstrang an den Versorgungsstrang anzuschließen. Dadurch hat der Versorgungsstrang mehrere Aufgaben. Einerseits dient er zur Versorgung der benachbarten Tränkestränge, insbesondere aller Tränkestränge der Tiertränken. Andererseits bildet der Versorgungsstrang zusammen mit dem anschließenden Rücklaufstrang den Zirkulationsstrang. Der Zirkulationsstrang ermöglicht eine ständige und/oder bedarfsweise Zirkulation von Flüssigkeit durch den vom Versorgungsstrang und dem daran anschließenden Rücklaufstrang gebildeten Kreislaufstrang, und zwar auch dann, wenn an den Tränkeventilen keine Flüssigkeit von den Tieren abgenommen wird.

Bevorzugt ist der Kreislauf- und/oder Zirkulationsstrang so ausgebildet und seine Enden mit dem Flüssigkeitsvorrat verbunden, dass ein zum Flüssigkeitsvorrat weisendes Ende des Versorgungsstrangs vom Flüsssigkeitsvorrat mit Flüssigkeit speisbar ist und der Rücklaufstrang mit seinem stromabwärtsseitigen Ende im Flüssigkeitsvorrat mündet zum Zurückleiten von Flüssigkeit zum Flüssigkeitsvorrat. Dadurch entsteht unter Einbeziehung des Flüssigkeitsvorrats ein ständiger Flüssigkeitskreislauf in mindestens dem Versorgungsstrang und dem Rücklaufstrang.

Gemäß einer anderen vorteilhaften Ausgestaltungsmöglichkeit der Tiertränke sind die flüssigkeitseintrittsseitigen Enden der Tränkestränge, vorzugsweise aller Tränkestränge, mit dem gemeinsamen Versorgungsstrang und den den flüsisgkeitseintrittsseitigen Enden gegenüberliegenden Enden der Tränkestränge, vorzugsweise aller Tränkestränge, direkt oder über einen Sammelstrang mit dem Rücklaufstrang flüssigkeitsleitend verbunden. Bei dieser Ausgestaltung der Tiertränke zirkuliert nicht nur die Flüssigkeit im Versorgungsstrang und im Rücklaufstrang, sondern auch in den Tränkesträngen, bevorzugt allen Tränkesträngen, und gegebenenfalls auch im Sammelstrang, woran sich dann der Rücklaufstrang anschließt. Dadurch zirkuliert die Tränkeflüssigkeit ständig im gesamten Leitungssystem der Tiertränke.

Bevorzugt ist es vorgesehen, dass der Versorgungsstrang vom Flüssigkeitsvorrat mit Flüssigkeit speisbar ist und/oder aus dem Rücklaufstrang Flüssigkeit in den Flüssigkeitsvorrat zurückströmt. Dadurch wird ständig Flüssigkeit dem Flüssigkeitsvorrat entnommen und von den Tieren nicht aufgenommene Flüssigkeit wieder zum Flüssigkeitsvorrat zurückgeleitet. Es entsteht dadurch ein sich ständig in Bewegung befindender Flüssigkeitskreislauf in mindestens einem Teil des Rohrleitungssystems, insbesondere dem Flüssigkeitsleitungssystem, der Tiertränke. Vorzugsweise wird der Flüssigkeitsvorrat ständig oder zumindest bedarfsweise bzw. zeitweise umgewälzt, so dass der Flüssigkeitsvorrat immer in Bewegung bleibt oder wenigstens periodisch in Bewegung ist. Dadurch wird wirksam verhindert, dass im Flüssigkeitsvorrat und/oder im Leitungssystem der Tiertränken durch stehende Flüssigkeit hygienische Beeinträchtigungen entstehen.

Zur ständigen oder periodischen und/oder bedarfsweisen Umwälzung der Flüssigkeit der Tiertränke ist mindestens eine Pumpe, insbesondere eine Umwälzpumpe, vorgesehen. Bevorzugt befindet sich diese am Ende des Rücklaufstrangs vor dem Flüssigkeitsvorrat. Es ist aber auch denkbar, die Pumpe bzw. Umwälzpumpe, direkt im Flüssigkeitsvorrat anzuordnen durch Ausbildung der Pumpe bzw. Umwälzpumpe als Tauchpumpe oder dergleichen. Dadurch saugt die mindestens eine Pumpe Flüssigkeit durch die Kreislaufleitung bzw. den Kreislaufstrang.

Bei einer bevorzugten Ausgestaltung der Tiertränke ist der Flüssigkeitsvorrat von mindestens einem Flüssigkeitsvorratsbehälter gebildet. Der Flüssigkeitsvorratsbehälter wird von einer Flüssigkeitsquelle, beispielsweise einer öffentlichen Wasserversorgung oder einer Stallwasserversorgung, mit Flüssigkeit versorgt.

Damit der Flüssigkeitsvorratsbehälter stets einen ausreichenden Flüssigkeitsvorrat beinhaltet, kann es vorgesehen sein, dass von der Flüssigkeitsquelle der Flüssigkeitsvorrat im Flüssigkeitsvorratsbehälter bei Erreichen eines Mindestniveaus auf ein Maximalniveau auffüllbar ist. Weiterhin kann es bevorzugt vorgesehen sein, dass nicht nur das Maximalniveau, sondern auch das Mindestniveau, über dem vorzugsweise gleichen Niveau der Tränkestränge, insbesondere aller Tränkestränge, liegt. Durch die Festlegung dieses Niveaus, insbesondere des Mindest- und Maximalniveaus, wird im Flüssigkeitsvorratsbehälter ein statischer Druck erzeugt und aufrechterhalten, der in und/oder vor den Tränkeventilen den gewünschten Druck erzeugt. Dadurch ist der Flüssigkeitsdruck an den Tränkeventile unabhängig vom Flüssigkeitsdruck der von der Flüssigkeitsquelle dem Flüssigkeitsvorratsbehälter zugeführten Flüssigkeit. Es stellt sich so ohne irgendwelche zusätzlichen Druckminderer an den Tränkeventilen ein Flüssigkeitsdruck ein, der vorgebbar ist durch das Flüssigkeitsniveau, insbesondere das Spektrum zwischen dem maximalen und minimalen Flüssigkeitsniveaus im Flüssigkeitsvorratsbehälter.

Eine Veränderung des Drucks in bzw. an den Tränkeventilen kann einfach vorgenommen werden durch Veränderung des maximalen und minimalen Flüssigkeitsniveaus im Flüssigkeitsvorratsbehälter, beispielsweise durch ein entsprechendes Anheben oder Absenken des Flüssigkeitsbehälters und/oder des Flüssigkeitsvorrats.

Gemäß einer bevorzugten Weiterbildungsmöglichkeit der Tiertränke sind der mindestens eine Versorgungsstrang und/oder der wenigstens eine Rücklaufstrang und/oder der wenigstens eine Sammelstrang mindestens teilweise oberhalb des maximalen Flüssigkeitsniveaus im Flüssigkeitsvorratsbehälter und/oder dem Niveau der Tränkestränge mit den diesen zugeordneten Tränkeventilen angeordnet. Dabei befinden sich vorzugsweise die Tränkestränge und/oder ihre Tränkeventile auf einem gemeinsamen Niveau oder einem gemeinsamen Niveaubereich. Dabei können stromabwärts der Versorgungsleitung weiter hinten liegende Tränkestränge zur Kompensation des eventuellen Druckabfalls geringfügig niedriger angeordnet sein als die oder einige davorliegende Tränkestränge. Dadurch wird ein gegebenenfalls vorhandenes Druckgefälle, insbesondere in größeren Leitungssystemen, insbesondere bei längeren oder vielen parallelen Tränkesträngen mit einer relativ großen Anzahl von Tränkeventilen, erreicht, dass an allen Tränkeventilen ein nahezu gleichgroßer Flüssigkeitsdruck entsteht.

Durch die Anordnung mindestens des Versorgungsstrangs oder wenigstens eines Teils desselben oberhalb des maximalen Flüssigkeitsniveaus des Flüssigkeitsvorrats durchströmt die Flüssigkeit vom Flüssigkeitsvorrat bis zu den Tränkeventilen eine Art Schwanenhals. Die Folge ist, dass nach dem physikalischen Prinzip kommunizierender Röhren an den Tränkeventilen ein Flüssigkeitsdruck anliegt, der dem aktuellen statischen Flüssigkeitsdruck des Flüssigkeitsvorrats und/oder im Flüssigkeitsvorratsbehälter entspricht. Wenn an einem oder mehreren Tränkeventilen die Tiere Flüssigkeit abnehmen, entsteht an den Tränkeventilen quasi ein Unterdruck oder auch negativer Druck. Dieser wird ausgeglichen durch ein Nachströmen von Flüssigkeit aus dem Flüssigkeitsvorrat. Dieses Nachströmen von Flüssigkeit aus dem Flüssigkeitsvorrat und/oder Flüssigkeitsvorratsbehälter dauert so lange an, bis sich an den Tränkeventilen wieder ein Flüssigkeitsdruck einstellt, der dem statischen Flüssigkeitsdruck des Flüssigkeitsvorrats, insbesondere im Flüssigkeitsvorratsbehälter, entspricht.

Bevorzugt ist es vorgesehen, dass der höher als die Tränkestränge angeordnete Versorgungsstrang oder mindestens ein Teil desselben und/oder der Sammelstrang über senkrecht oder geneigt verlaufende Leitungen, insbesondere Steig- und/oder Gefälleleitungen, mit gegenüberliegenden Enden der strömungstechnisch gesehen parallel zueinander angeordneten Tränkestränge flüssigkeitsführend verbunden sind. Insbesondere kann der mindestens eine Versorgungstrang über jeweils eine Gefälleleitung an die stromeinwärtigen (anfänglichen) Enden der, vorzugsweise aller Tränkestränge angeschlossen und/oder die gegenüberliegenden, stromabwärtsseitigen Enden der Tränkestränge über jeweils eine Steigleitung an den Sammelstrang angeschlossen sein. Die Steig- und/oder Gefälleleitung verbinden dabei den mindestens zum Teil höherliegenden Versorgungsstrang und/oder Sammelstrang mit dem unter dem Niveau der Flüssigkeit des Flüssigkeitsvorrats angeordneten Tränkesträngen und den diesen zugeordneten Tränkeventilen. Hierdurch werden praktisch Schwanenhälse vor den flüssigkeitseintrittsseitigen Enden aller Tränkestränge und hinter den stromabwärtsliegenden Enden der Tränkestränge geschaffen.

Durch die Anordnung der Tränkestränge mit den Tränkeventilen unter den Flüssigkeitspegel des Flüssigkeitsvorrats, insbesondere im Flüssigkeitsvorratsbehälter, ist der Flüssigkeitsdruck an den Tränkeventilen vorbestimmbar bzw. anpassbar durch die Höhendifferenz der Tränkeventile der Tränkestränge, vorzugsweise aller Tränkeventile und aller Tränkestränge, zum demgegenüber entsprechend höheren Flüssigkeitspegel des Flüssigkeitsvorrats, insbesondere im Flüssigkeitsvorratsbehälter.

Bevorzugt wird durch eine Veränderung des Flüssigkeitspegels im Flüssigkeitsvorratsbehälter eine individuelle Einstellung des Flüssigkeitsdrucks an den Tränkeventilen zugelassen. Der Flüssigkeitsdruck ist so einfach und zuverlässig veränderbar und den Anforderungen entsprechend anpassbar. Dadurch ist der Flüssigkeitsdruck an den Tränkeventilen, vorzugsweise allen Tränkeventilen, veränderbar und/oder an Vorgaben anpassbar.

Nach einer vorteilhaften Ausgestaltungsmöglichkeit der Tiertränke sind mindestens ein Versorgungsstrang und/oder der mindestens eine Rücklaufstrang entlüftbar. Die Entlüftung erfolgt bevorzugt an mindestens einer oder jeder höchsten Stelle des Versorgungsstrangs und/oder des Rücklaufstrangs. Diese höchste Stelle befindet sich beispielsweise am Scheitelpunkt eines einen dachartigen Verlauf aufweisenden Versorgungsstrangs und/oder Rücklaufstrangs oder im Bereich eines Schwanenhalses zur Bildung einer höchsten Stelle des Versorgungsstrangs und/oder des jeweiligen Sammelstrangs und/oder des Rücklaufstrangs. Durch die Entlüftung wird sichergestellt, dass sich im jeweiligen Strang, vorzugsweise im gesamten Leitungssystem, nur Flüssigkeit, insbesondere Wasser, befindet. Dadurch kann schwerkraftbedingt und/oder nach dem Prinzip kommunizierender Gefäße bzw. Röhren der hydrostatische Druck der Flüssigkeit zum Nachströmen von Flüssigkeit in darunterliegenden Tränkesträngen mit den diesen zugeordneten Tränkeventilen dienen. Es strömt so automatisch die jeweils von den Tieren an den Tränkeventilen entnommene Flüssigkeitsmenge nach, so dass sich an den Tränkeventilen wieder der gleiche Flüssigkeitsdruck einstellt, der dem hydrostatischen Druck der Flüssigkeit im Flüssigkeitsvorrat entspricht. Die Flüssigkeit im luft- bzw. gaslosen Leitungssystem, insbesondere dem mindestens einen Versorgungsstrang und/oder Rücklaufstrang, kann so auch über höherliegende Leitungsabschnitte, insbesondere mindestens teilweise höherliegende Abschnitte des jeweiligen Versorgungsstrangs und/oder Rücklaufstrangs, selbsttätig zu den Tränkesträngen der Tränkeventile nachströmen zur Aufrechterhaltung des vom Flüssigkeitsniveau im Flüssigkeitsvorratsbehälter vorbestimmten bzw. eingestellten und/oder vorgegebenen Flüssigkeitsdruck an oder vor den Tränkeventilen.

Eine andere Weiterbildungsmöglichkeit der Tiertränke sieht es vor, den mindestens einen Versorgungsstrang und/oder Rücklaufstrang durch Vakuum zu entlüften, vorzugsweise durch eine an den mindestens einen Versorgungsstrang, Sammelstrang und/oder Rücklaufstrang angeschlossene Luftabsaugeinrichtung. Dadurch kann Luft oder ein Gas aus mindestens einem Versorgungsstrang, dem Sammelstrang und/oder Rücklaufstrang gezielt abgesaugt werden, vorzugsweise an mindestens einer höchsten Stelle des wenigstens einen Versorgungsstrangs, Sammelstrangs und/oder Rücklaufstrangs. Es kann so das Flüssigkeitsrohrleitungssystem der Tiertränke vollständig von mindestens einem Versorgungsstrang, Sammelstrang und/oder Rücklaufstrang aus gezielt entlüftet und dadurch eine vollständige Befreiung des Leitungssystems von Luft oder einem sonstigen Gas herbeigeführt werden. Das trägt zur zuverlässigen Funktionsweise der erfindungsgemäßen Tiertränke bei.

Zwei bevorzugte Ausführungsbeispiele der Erfindung werden nachfolgend anhand der Zeichnung näher erläutert. In dieser zeigen:
- Fig. 1: einen schematischen Querschnitt durch einen Stall mit einem erfindungsgemäßen Tränkesystem,
- Fig. 2: eine perspektivische Ansicht eines ersten Ausführungsbeispiels des Tränkesystems, und
- Fig. 3: eine perspektivische Ansicht eines zweiten Ausführungsbeispiels des Tränkesystems.

Die in den Figuren gezeigte Tiertränke ist als eine sogenannte Strangtränke ausgebildet. Diese Tiertränke ermöglicht es den Tieren, ihren benötigten Flüssigkeitsbedarf selbsttätig zu decken. Üblicherweise wird eine solche Tiertränke bei der Massentierhaltung von Geflügel oder anderen Kleintieren verwendet.

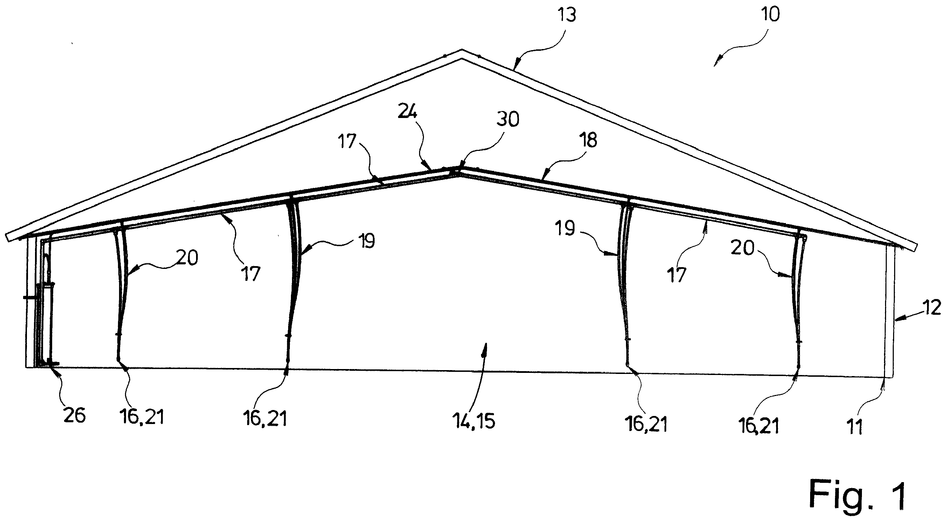

Die Tiertränke ist üblicherweise in einem Stall 10 angeordnet. Die Fig. 1 zeigt schematisch ein Beispiel eines solchen Stalls 10. Der Stall 10 verfügt über einen Stallboden 11, Seitenwände 12 und ein Dach 13. Das hier gezeigte Dach 13 ist als ein Spitzdach mit verhältnismäßig geringer Dachneigung ausgebildet. Der Stall 10 kann aber auch eine andere Dachform aufweisen oder anders als in der Fig. 1 dargestellt ausgebildet sein.

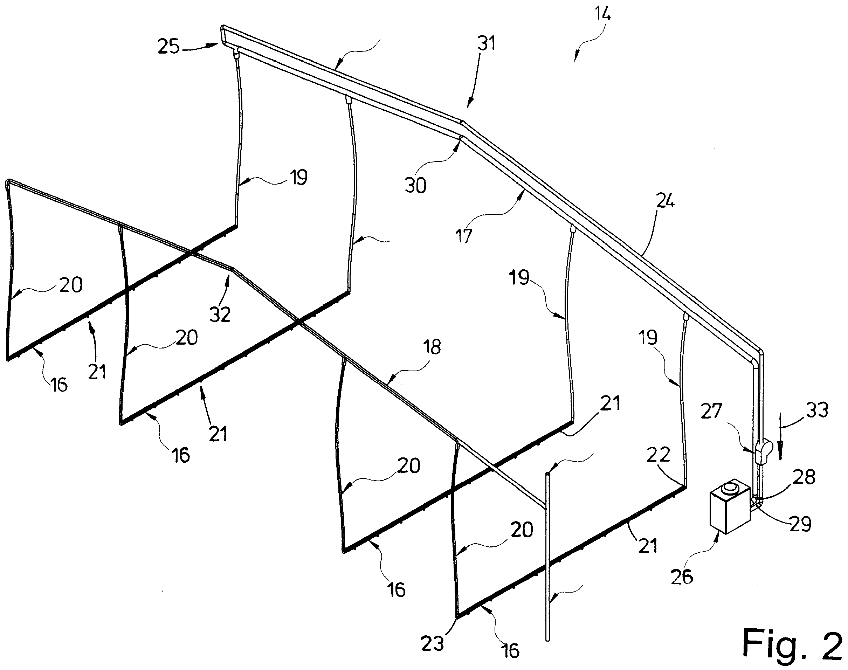

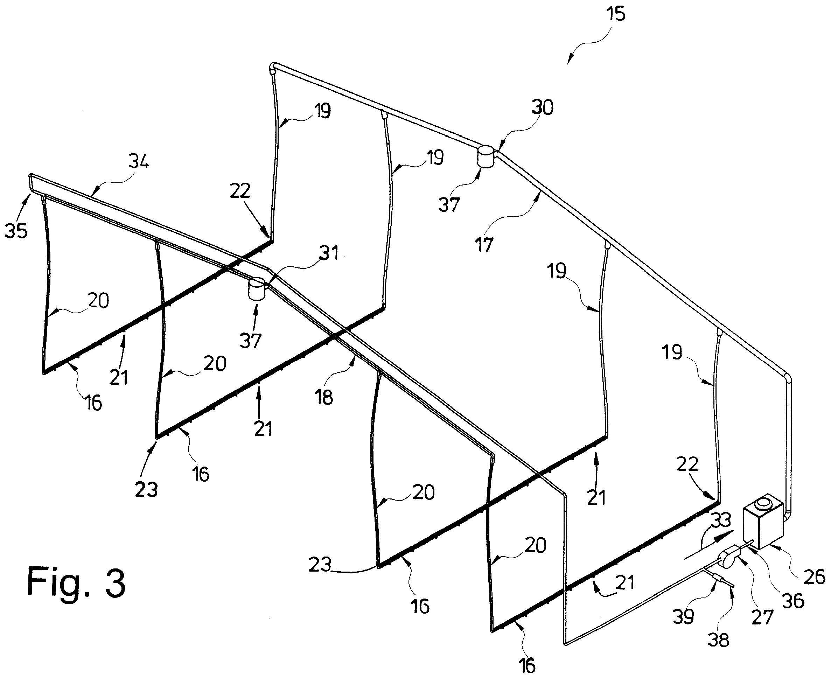

Die Tiertränke verfügt über ein im Stall 10 installiertes Flüssigkeitsleitungssystem 14, 15, das in den Fig. 2 und 3 perspektivisch dargestellt ist. Das Flüssigkeitsleitungssystem 14, 15 weist zum Teil mehrere verschiedene Stränge auf, die in nachfolgend näher beschriebener Weise untereinander verbunden sind.

Das in der Fig. 2 dargestellte Flüssigkeitsleitungssystem 14 und das in der Fig. 3 gezeigte Flüssigkeitsleitungssystem 15 verfügen in den gezeigten Ausführungsbeispielen jeweils über vier Tränkestränge 16, einen Versorgungsstrang 17, einen Sammelstrang 18, Fallleitungen 19 und Steigleitungen 20. Die Erfindung ist nicht auf vier Tränkestränge 16 beschränkt. Die Flüssigkeitsleitungssyteme 14 bzw. 15 können eine geringere oder größere Anzahl von Tränkesträngen 16 aufweisen. Die in den Fig. 2 und 3 gezeigten Tränkestränge 16 sind gleich ausgebildet, insbesondere gleich lang. Alternativ können die Tränkestränge 16 auch unterschiedlich ausgebildet sein, insbesondere verschiedene Längen aufweisen. Der Versorgungsstrang 17 und der Sammelstrang 18 sind bevorzugt auch als stabile Rohre ausgebildet, die fest im Stall 10 verlegt sind, indem sie beispielsweise an geeigneten Bauteilen des Stalls 10 befestigt sind. Die Fallleitungen 19 und die Steigleitung 20 sind bevorzugt aus flexiblen Schläuchen gebildet.

Die Querschnitte der Tränkestränge 16, des Sammelstrangs 18 und der Fallleitung 19 sind bevorzugt unterschiedlich, indem der Versorgungsstrang 17 und der Stammelstrang 18 über größere Strömungsquerschnitte verfügen, die 1,5- bis 3-fach so groß sein können wie der lichte Strömungsquerschnitt der Tränkestränge 16. Die Strömungsquerschnitte der Fallleitung 19 und der Steigleitung 20 entsprechen entweder denen des Versorgungsstrangs 17 bzw. des Sammelstrangs 18 oder denen der Tränkestränge 16. Denkbar ist es auch, dass die Strömungsquerschnitte der Fallleitung 19 und der Steigleitung 20 zwischen den unterschiedlich großen Strömungsquerschnitten des Versorgungsstrangs 17 und des Sammelstrangs 18 einerseits sowie der Tränkestränge 16 andererseits liegen.

Die Tränkestränge 16 sind im Stall 10 an in den Figuren nicht gezeigten Seilen aufgehängt, und zwar in einem der Größe der Tiere entsprechenden Abstand über dem Stallboden 11. Dabei verlaufen die Tränkestränge 16 vorzugsweise horizontal, also mit parallelem Abstand zum waagerechten Stallboden 11. Im gezeigten Ausführungsbeispiel sind die Abstände aller Tränkestränge 16 zum Stallboden 11 gleich, so dass alle vier Tränkestränge 16 in einer Ebene liegen, die mit parallelem Abstand über dem Stallboden 11 verläuft. Die Tränkestränge 16 sind mit Abstand zueinander angeordnet. Im gezeigten Ausführungsbeispiel verlaufen alle Tränkestränge 16 parallel zueinander, wobei jeweils ein äußeres Paar Tränkestränge 16 einen geringeren Abstand aufweist als die innenliegenden Tränkestränge 16 untereinander. Hierauf ist die Erfindung aber nicht beschränkt. Vielmehr eignet sich die Erfindung für beliebige Anordnungen der Tränkestränge 16 relativ zueinander. Auch ist es denkbar, dass die benachbarten Tränkestränge 16 parallel nicht zueinander verlaufen. Entscheidend ist, dass die Tränkestränge 16 mit Abstand nebeneinander angeordnet sind.

Jeder der vorzugsweise gleich ausgebildeten Tränkestränge 16 ist mit Tränkeventilen 21 versehen. Die gleich ausgebildeten Tränkestränge 16 verfügen im gezeigten Ausführungsbeispiel über eine gleiche Anzahl von Tränkeventilen 21, wobei der Abstand benachbarter Tränkeventile 21 stets etwa gleich sein kann. Es kann aber auch eine andere Verteilung der Tränkeventile 21 längs der Tränkestränge 16 erfolgen. Auch kann die Anzahl der Tränkeventile 21 pro Tränkestrang 16 beliebig variieren.

Die vorzugsweise gleichen Tränkeventile 21 sind üblicherweise von unten in die vorzugsweise einen quadratischen bzw. rechteckigen Querschnitt aufweisenden Tränkestränge 16 eingeschraubt und dadurch mit der Unterseite der Tränkestränge 16 verbunden. Die an sich bekannten Tränkeventile 21 weisen einen teilweise unten aus ihrem Gehäuse herausragenden Ventilstift auf, den die Tiere am unteren freien Ende anheben und/oder verkippen können. Durch dieses Anheben und/oder Verkippen können die Tiere das jeweilige Tränkeventil 21 zur Abgabe von Flüssigkeit öffnen. Bei der Flüssigkeit kann es sich um reines Wasser, aber auch Wasser mit Zusätzen, beispielsweise Arzneimitteln, Nährmitteln oder dergleichen handeln. Nach dem Loslassen des Ventilstifts schließt das jeweilige Tränkeventil 21 automatisch.

Flüssigkeitseintrittsseitige Enden 22 der Tränkestränge 16 sind über Fallleitungen 19 mit dem Versorgungsstrang 17 flüssigkeitsleitend verbunden. Dabei verläuft der Versorgungsstrang 17 etwa quer zu den Tränkesträngen 16. Vorzugsweise liegt dabei die Längsachse des Versorgungsstrangs 17 auf einer gedachten Linie, auf der die flüssigkeitseintrittsseitigen Enden 22 aller in Längsrichtung des Versorgungsstrangs 17 quergerichtet mit Abstand aufeinanderfolgenden Tränkestränge 16 liegen. Dadurch erfolgt eine gleichzeitige Versorgung sämtlicher Tränkestränge 16 mit Flüssigkeit aus dem Versorgungsstrang 17. Das entspricht im strömungstechnischen Sinne einer Parallelschaltung bzw. Parallelversorgung aller Tränkestränge 16 vom gemeinsamen Versorgungsstrang 17. Es sind also im Gegensatz zu einer strömungstechnischen Reihenversorgung nicht die einzelnen Tränkestränge 16 nacheinander vom Versorgungsstrang 17 mit Flüssigkeit versorgbar, sondern gleichzeitig bzw. simultan.

Die den flüssigkeitseintrittseitigen Enden 22 gegenüberliegenden stromabwärtsseitigen Enden bzw. flüssigkeitsaustrittsseitigen Enden 23 aller Tränkestränge 16 sind flüssigkeitsleitend mit dem Sammelstrang 18 verbunden. Diese Verbindung erfolgt im Prinzip analog zur Verbindung des Versorgungsstrangs 17 mit den flüssigkeitseintrittsseitigen Enden 22 der Tränkestränge 16. Demzufolge verläuft der Sammelstrang 18 parallel zum Versorgungsstrang 17 und ebenfalls wie der Versorgungsstrang 17 quer zu den Tränkesträngen 16. Die Verbindung der flüssigkeitsaustrittsseitigen Enden 23 aller Tränkestränge 16 mit dem Sammelstrang 18 erfolgt über Steigleitungen 20 zwischen flüssigkeitsaustrittsseitigen Enden 23 aller Tränkestränge 16 und entsprechenden in Strömungsrichtung des Sammelstrangs 18 beabstandet aufeinanderfolgenden Anschlüssen der Steigleitungen 20 am Sammelstrang 18. Durch diese Art der Verbindung der flüssigkeitsausstrittsseitigen Enden 23 der Tränkestränge 16 mit dem Sammelstrang 18 kann Flüssigkeit aus allen Tränkesträngen 16 gemeinsam und gegebenenfalls gleichzeitig in den Sammelstrang 18 gelangen. Deswegen stellt die Verbindung der flüssigkeitsaustrittsseitigen Enden 23 der Tränkestränge 16 mit dem Sammelstrang 18 ebenfalls im strömungstechnischen Sinne eine Parallelschaltung oder Parallelversorgung dar.

Dem Versorgungsstrang 17 ist ein Rücklaufstrang 24 zugeordnet. Der Rücklaufstrang 24 erstreckt sich über die gesamte Länge des Versorgungsstrangs 17. Im gezeigten Ausführungsbeispiel erstreckt sich der Rücklaufstrang 24 parallel zum Versorgungsstrang 17, und zwar über denselben hinweg. Der Rücklaufstrang 24 kann aber auch neben dem Versorgungsstrang 17 verlaufen oder auch anitparallel hierzu. Möglich ist es auch, dass der Versorgungsstrang 17 und der Rücklaufstrang 24 zusammenhängend ausgebildet sind, indem sie einen Parallelstrang mit zwei Strömungskanälen bilden.

Der Versorgungsstrang 17 ist an seinem vom stromabwärtsseitigen Ende 25 mit einem Anfang des Rücklaufstrangs 24 verbunden bzw. fortgesetzt. Dadurch bilden der Versorgungsstrang 17 und der damit zusammenhängende Rücklaufstrang 24 zusammen einen Zirkulationsstrang, der eine Zirkulation von Flüssigkeit im Versorgungsstrang 17 und auch dem Rücklaufstrang 24 in Strömungsrichtung 33 zulässt. Diese Zirkulation kann ständig oder nur in gewünschten Zeiträumen periodisch erfolgen.

Die Tiertränke verfügt über einen Flüssigkeitsvorrat 26, der bevorzugt als Flüssigkeitsspeicher oder als Flüssigkeitsvorratsbehälter ausgebildet und/oder in einem solchen untergebracht sein kann. Der Flüssigkeitsvorrat 26 im Flüssigkeitsvorratsbehälter ist bedarfsweise auffüllbar durch einen nicht gezeigten Zulauf einer Flüssigkeitsquelle, beispielsweise an einer öffentlichen Wasserversorgung, einer Hauswasserversorgung oder einem Mischbehälter, indem Frischwasser mit Zusätzen wie zum Beispiel Nährstoffen und/oder Arzneimitteln vermischbar ist. Es ist aber auch denkbar, die Zusätze dem Flüssigkeitsvorrat 26, insbesondere Flüssigkeitsvorratsbehälter, zuzugeben bzw. zuzudosieren und zu vermischen.

Die Zufuhr von Flüssigkeit, insbesondere Wasser, zum Flüssigkeitsvorrat 26, insbesondere Flüssigkeitsvorratsbehälter, erfolgt bevorzugt bei Bedarf, und zwar gesteuert vom Niveau des Flüssigkeitsvorrats 26, insbesondere der Flüssigkeit im Flüssigkeitsvorratsbehälter. Die Steuerung sorgt dafür, dass der Flüssigkeitsvorrat 26 stets ein Mindestniveau aufweist. Sobald dieses erreicht wird, wird von außen Flüssigkeit bzw. Wasser aufgefüllt bis zum Erreichen eines maximalen Niveaus des Flüssigkeitsvorrats 26, insbesondere eines maximalen Flüssigkeitsstands im Flüssigkeitsvorratsbehälter. Bevorzugt sind das Maximal- und Minimalniveau bei Bedarf veränderbar, um den an den Tränkeventilen 21 vorzugsweise sämtlicher Tränkestränge 16 anstehenden Flüssigkeitsdruck den Anforderungen entsprechend anzupassen.

Ein zur Flüssigkeitseinspeisung dienender Anfang 28 des Versorgungsstrangs 17 ist flüssigkeitsleitend mit dem Flüssigkeitsvorrat 26 verbunden, insbesondere an den Flüssigkeitsvorratsbehälter angeschlossen. Ebenso ist ein Ende 29 des Rücklaufstrangs 24 mit dem Flüssigkeitsvorrat 26 verbunden, insbesondere am Flüssigkeitsvorratsbehälter angeschlossen. Dadurch entstehen durch den Versorgungsstrang 17, den diesen in Strömungsrichtung fortsetzenden Rücklaufstrang 24 und die Verbindung des Anfangs 28 bzw. Endes 29 derselben mit dem Flüssigkeitsvorrat 26, insbesondere dem Flüssigkeitsvorratsbehälter, ein geschlossener Flüssigkeitskreislauf zur Herbeiführung einer Zirkulation der Flüssigkeit in den genannten Strängen und im Flüssigkeitsvorratsbehälter.

Die Flüssigkeit im Versorgungsstrang 17 und im Rücklaufstrang 24 wird durch eine Pumpe 27 in Strömungsrichtung 33 umgewälzt. Das kann kontinuierlich oder auch diskontinuierlich innerhalb festgelegter Zeitabstände oder bei Bedarf geschehen. Im gezeigten Ausführungsbeispiel ist die Pumpe dem Rücklaufstrang 24 zugeordnet. Sie befindet sich in Strömungsrichtung der Flüssigkeit durch den Rücklaufstrang 26 gesehen kurz vor dem Ende 29 desselben und dadurch in der Nähe oder gegebenenfalls auch am Eintritt des Endes 29 des Rücklaufstrangs 24 in den Flüssigkeitsvorrat 26, insbesondere den Flüssigkeitsvorratsbehälter.

Der Versorgungsstrang 17 beim Ausführungsbeispiel der Fig. 2 und auch der Sammelstrang 18 sowie der Rücklaufstrang 24 sind ähnlich wie das Dach 13 des Stalls 10 mit einem flachen, V-förmigen Verlauf versehen. Dadurch entsteht am mittigen oder etwa mittigen Scheitelpunkt des Versorgungsstrangs 17, des Sammelstrangs 18 und des Rücklaufstrangs 24 jeweils eine höchste Stelle 30, 31, 32. Zumindest an einer der höchsten Stellen, insbesondere an der höchsten Stelle 30 des Versorgungsstrangs 17, ist eine Entlüftung vorgesehen. Falls nur an der höchsten Stelle 30 eine Entlüftung vorgesehen ist, brauchen der Sammelstrang 18 und der Rücklaufstrang 24 keine höherliegenden höchsten Stellen 31, 32 aufzuweisen. Durch die Entlüftung mindestens der höchsten Stelle 30 kann aus dem Flüssigkeitsleitungssystem 14 Luft entweichen. Die Folge ist, dass bei der erfindungsgemäßen Tiertränke die Flüssigkeit durch das Flüssigkeitsleitungssystem 14 schwerkraftbedingt aus dem Flüssigkeitsvorrat 26, insbesondere dem Flüssigkeitsvorratsbehälter desselben, zu allen Tränkeventilen 21 in sämtlichen Tränkesträngen 16 strömen kann. Die Flüssigkeit fließt dadurch nach dem physikalischen Prinzip der kommunizierenden Röhren automatisch schwerkraftbedingt zu den Tränkeventilen 21 in allen Tränkesträngen 16 nach, wenn irgendwo von den Tieren Flüssigkeit entnommen worden ist. Die von den Tieren an den Tränkeventilen 21 abgenommene Flüssigkeit wird automatisch quasi wieder aufgefüllt. Dazu bedarf es nicht der Pumpe 27; diese dient nur zur Herbeiführung einer Flüssigkeitszirkulation.

Damit der durch den Füllstand des Flüssigkeitsvorrats 26 entstehende statische Druck der Flüssigkeit im Flüssigkeitsbehälter auch gleichermaßen an allen Tränkesträngen 16 der diesen zugeordneten Tränkeventilen 21 ansteht, ist das Flüssigkeitsniveau des Flüssigkeitsvorrats 26 so gewählt, dass der statische Druck dieses Flüssigkeitsniveaus dem an den Tränkeventilen 21 aller Tränkestränge 16 gewünschten Flüssigkeitsdruck entspricht. Demzufolge sind der Flüssigkeitsvorrat 26, insbesondere der Flüssigkeitsvorratsbehälter, so hoch über dem Stallboden 11 angeordnet und der minimale Pegel des Flüssigkeitsvorrats 26 so bemessen, dass diese über dem Niveau der Tränkestränge 16 und allen diesen zugeordneten Tränkeventile 21 liegen. Dieser Niveauunterschied ist umso größer, je größer der Flüssigkeitsdruck an den Tränkeventilen 21 sein soll.

Falls es gewünscht ist, den Druck an den Tränkeventilen 21 zu verändern, kann es vorgesehen sein, den Flüssigkeitsvorrat 26 in seinem Abstand vom Stallboden 11 veränderlich auszubilden, insbesondere den Flüssigkeitsbehälter anhebbar oder absenkbar auszubilden oder das Maximal- und Minimalniveau der Flüssigkeit im Flüssigkeitsbehälter durch eine entsprechende Steuerung des Zulaufs von Flüssigkeit in den Flüssigkeitsbehälter zu verändern.

Die Fig. 3 zeigt das Flüssigkeitsleitungssystem 15 nach einem zweiten Ausführungsbeispiel der Erfindung. Dieses Flüssigkeitsleitungssystem 15 unterscheidet sich von dem Flüssigkeitsleitungssystem 14 der Fig. 2 im Wesentlichen nur durch einen anderen Rücklaufstrang 34. Dieser Rücklaufstrang 34 ist dem Sammelstrang 18 zugeordnet. Dazu ist ein stromabwärtsseitiges Ende 35 des Sammelstrangs 18 mit dem Anfang des Rücklaufstrangs 34 verbunden. Es bilden demzufolge beim Ausführungsbeispiel der Fig. 3 der Sammelstrang 18 und der Rücklaufstrang 34 den Zirkulationsstrang.

Ein in Strömungsrichtung 33 gesehen hinteres, stromabwärtsseitiges Ende 36 des Rücklaufstrangs 34 ist mit dem Flüssigkeitsvorrat 26 verbunden, insbesondere mit den Flüssigkeitsvorratsbehälter flüssigkeitsleitend verbunden. Die Pumpe 27 ist bei diesem Ausführungsbeispiel kurz vor dem stromabwärtsseitigen Ende 36 des Rücklaufstrangs 34 vorgesehen. Dadurch entsteht bei der Tiertränke der Fig. 3 ein das gesamte Flüssigkeitsleitungssystem 15 umfassender Flüssigkeitskreislauf. Während beim Ausführungsbeispiel der Fig. 2 der Zirkulationskreislauf der Flüssigkeit nur im Versorgungsstrang 17, dem Rücklaufstrang 24 und dem Flüssigkeitsvorrat 26 stattfindet, führt die Zuordnung des Rücklaufstrangs 34 zum Sammelstrang 18 zu einer Zirkulation der Flüssigkeit im gesamten Flüssigkeitsleitungssystem 15, also nicht nur im Versorgungsstrang 17, dem Sammelstrang 18 und dem Rücklaufstrang 34, sondern auch in den Fallleitungen 19, den Steigleitungen 20 und den Tränkesträngen 16, insbesondere allen Tränkesträngen 16.

Beim Flüssigkeitsleitungssystem 15 der Fig. 3 sind der höchsten Stelle 30 des Versorgungsstrangs 17 und der höchsten Stelle 31 des Sammelstrangs 18 symbolisch dargestellte Entlüftungsventile 37 zugeordnet. Außerdem verfügt der Rücklaufstrang 34 über einen Luftabsauganschluss 38, dem eine Vakuumeinrichtung 39 zugeordnet sein kann.

**Bezugszeichenliste:**

| | | | |
|---|---|---|---|
| 10 | Stall | 36 | stromabwärtsseitiges Ende |
| 11 | Stallboden | 37 | Entlüftungsventil |
| 12 | Seitenwand | 38 | Luftabsauganschluss |
| 13 | Dach | 39 | Vakuumeinrichtung |
| 14 | Flüssigkeitsleitungssystem | | |
| 15 | Flüssigkeitsleitungssystem | | |
| 16 | Tränkestrang | | |
| 17 | Versorgungsstrang | | |
| 18 | Sammelstrang | | |
| 19 | Fallleitung | | |
| 20 | Steigleitung | | |
| 21 | Tränkeventil | | |
| 22 | flüssigkeitseintrittsseitiges Ende | | |
| 23 | flüssigkeitsaustrittsseitiges Ende | | |
| 24 | Rücklaufstrang | | |
| 25 | stromabwärtsseitiges Ende | | |
| 26 | Flüssigkeitsvorrat | | |
| 27 | Pumpe | | |
| 28 | Anfang | | |
| 29 | Ende | | |
| 30 | höchste Stelle | | |
| 31 | höchste Stelle | | |
| 32 | höchste Stelle | | |
| 33 | Strömungsrichtung | | |
| 34 | Rücklaufstrang | | |
| 35 | stromabwärtsseitiges Ende | | |

## Patentansprüche

1. Tiertränke mit mehreren Tränkeventilen (21), die zur selbsttätigen Entnahme von Flüssigkeit durch Tiere ausgebildet sind, mit einem Flüssigkeitsleitungssystem (14, 15), das über mindestens einen Tränkestrang (16), dem Tränkeventile (21) zugeordnet sind, verfügt und mit einem Flüssigkeitsvorrat (26), **dadurch gekennzeichnet, dass** das Flüssigkeitsleitungssystem (14, 15) zusätzlich zu den Tränkesträngen (16) mindestens einen Versorgungsstrang (17) zur gleichzeitigen parallelen Speisung der Tränkestränge (16) mit Flüssigkeit und wenigstens einen Rücklaufstrang (24) zur Rückführung von Flüssigkeit zum Flüssigkeitsvorrat (26) aufweist.

2. Tiertränke nach Anspruch 1, **dadurch gekennzeichnet, dass** der Versorgungsstrang (17) und der Rücklaufstrang (24) miteinander verbunden sind zur gemeinsamen Bildung eines Zirkulationsstrangs für Flüssigkeit und vorzugsweise parallel zueinander verlaufen.

3. Tiertränke nach Anspruch 1 oder 2, **dadurch gekennzeichnet, dass** Enden (22) auf einer Flüssigkeitszufuhrseite der Tränkestränge (16) mit dem gemeinsamen Versorgungsstrang (17) wasserführend verbunden sind und an ein stromabwärtsseitiges Ende (25) des Versorgungsstrangs (17) sich der Rücklaufstrang (24) anschließt.

4. Tiertränke nach Anspruch 1 oder 2, **dadurch gekennzeichnet, dass** flüssigkeitseintrittsseitige Enden (22) der Tränkestränge (16) mit dem Versorgungsstrang (17) und gegenüberliegende flüssigkeitsaustrittsseitige Enden (23) der Tränkestränge (16) direkt oder über einen Sammelstrang (18) mit dem Rücklaufstrang (24) verbunden sind.

5. Tiertränke nach einem der vorhergehenden Ansprüche, **dadurch gekennzeichnet, dass** der Versorgungsstrang (17) vom Flüssigkeitsvorrat (26) mit Flüssigkeit speisbar ist und/oder vom Rücklaufstrang (24) Flüssigkeit in den Flüssigkeitsvorrat (26) zurückführbar ist.

6. Tiertränke nach einem der vorhergehenden Ansprüche, **dadurch gekennzeichnet, dass** im Rücklaufstrang (24) vor dem Flüssigkeitsvorrat (26) eine Pumpe (27), insbesondere eine Umwälzpumpe, angeordnet ist.

7. Tiertränke nach einem der vorhergehenden Ansprüche, **dadurch gekennzeichnet, dass** der Flüssigkeitsvorrat (26) von mindestens einem Flüssigkeitsvorratsbehälter gebildet ist, wobei die Flüssigkeit im Flüssigkeitsvorratsbehälter von einer Flüssigkeitsquelle auffüllbar ist, vorzugsweise bei Erreichen eines Mindestniveaus auf ein Maximalniveau auffüllbar ist, wobei insbesondere beide Flüssigkeitsniveaus oberhalb des Niveaus der Tränkestränge (16) liegen.

8. Tiertränke nach einem der vorhergehenden Ansprüche, **dadurch gekennzeichnet, dass** der Versorgungsstrang (17) und/oder der Rücklaufstrang (24) und/oder Sammelstrang (18) mindestens teilweise oberhalb des maximalen Flüssigkeitsniveaus der Flüssigkeit im Flüssigkeitsvorrat (26), insbesondere den diesen bildenden bzw. aufweisenden Flüssigkeitsvorratsbehälter, und/oder den Niveaus der Tränkestränge (16) angeordnet sind, vorzugsweise auf einem gleichen, gemeinsamen Niveau.

9. Tiertränke nach einem der vorhergehenden Ansprüche, **dadurch gekennzeichnet, dass** der höher als die Tränkestränge (16) angeordnete Versorgungsstrang (17) und/oder Sammelstrang (18) über Steigleitungen (20) und/oder Fallleitungen (19) mit gegenüberliegenden Enden (22, 23) der beabstandet nebeneinander angeordneten Tränkestränge (16) flüssigkeitsführend verbunden sind, insbesondere der Versorgungsstrang über jeweils eine Gefälleleitung an die stromeinwärtigen Enden der Tränkestränge angeschlossen ist und/oder die stromabwärtsseitigen Enden der Tränkestränge am Sammelstrang angeschlossen sind.

10. Tiertränke nach einem der vorhergehenden Ansprüche, **dadurch gekennzeichnet, dass** der an den Tränkenventilen (21) anstehende Flüssigkeitsdruck von der Höhendifferenz der Tränkestränge (16) mit den Tränkeventilen (21) zum demgegenüber höheren Flüssigkeitspegel im Flüssigkeitsvorrat, insbesondere den diesen bildenden bzw. aufweisenden Flüssigkeitsvorratsbehälter, vorgebbar ist.

11. Tiertränke nach einem der vorhergehenden Ansprüche, **dadurch gekennzeichnet, dass** die Flüssigkeitsdrücke der Tränkeventile (21) bzw. an den Tränkeventilen (21) der Tränkestränge (16) vom Niveau des Flüssigkeitspegels des Flüssigkeitsvorrats (26) bzw. im Flüssigkeitsvorratsbehälter bestimmbar sind.

12. Tiertränke nach einem der vorhergehenden Ansprüche, **dadurch gekennzeichnet, dass** mindestens der Versorgungsstrang (17) und/oder Sammelstrang (18) entlüftbar sind.

13. Tiertränke nach einem der vorhergehenden Ansprüche, **dadurch gekennzeichnet, dass** mindestens der Versorgungsstrang (17) und/oder der Sammelstrang (18) einen solchen Verlauf aufweisen, dass mindestens eine Stelle derselben eine höchste Stelle bildet und an dieser mindestens einen höchsten Stelle der Versorgungsstrang (17) und/oder der Sammelstrang (18) entlüftbar sind.

14. Tiertränke nach Anspruch 12 oder 13, **dadurch gekennzeichnet, dass** der Versorgungsstrang (17) und/oder der Sammelstrang (18) durch ein Vakuum entlüftbar sind, vorzugsweise durch einen an der mindestens einen höchsten Stelle des Versorgungsstrangs (17) und/oder des Sammelstrangs (18) anschließbaren Vakuumerzeuger.
